# EUROPÄISCHE PATENTANMELDUNG

(11) **EP 2 997 835 A1**
(43) Veröffentlichungstag der Anmeldung: **23.03.2016**
(21) Anmeldenummer: 15002694.6
(22) Anmeldetag: 17.09.2015
(51) Int. Cl.: A23N 4/20, A23N 7/00

(54) **VERFAHREN UND VORRICHTUNG ZUM GEFAHRLOSEN AUFBEREITEN FRISCHER ANANASFRÜCHTE FÜR DEN VERZEHR**

(30) Priorität: 17.09.2014 DE 102014013454
(71) Anmelder: FB-Handels und Service Ltd., 56070 Koblenz (DE)
(72) Erfinder: Beuth, Frank, 56566 Neuwied (DE)
(74) Vertreter: Strauss, Peter

(57) **Zusammenfassung**

Zum gefahrlosen Aufbereiten frischer Ananasfrüchte für den Verzehr wird ein **Verfahren** mit folgenden Merkmalen vorgeschlagen: Die zu bearbeitende natürliche Frucht (20) wird in eine nach oben offene Fruchtaufnahme oder Fruchtauflage (5) eingestellt und anschließend mit Hilfe eines Mitnehmers oder Schiebers (21) horizontal durch ein Schutzgehäuse (2) zwangsgeführt, wobei an dessen Anfang mittels eines horizontal angeordneten unteren Messers (7) und eines davon beabstandeten oberen Messers (8) Kopfteil (20b) und Fußteil (20b) der Frucht (20) abgetrennt werden, wonach im mittleren Bereich des Schutzgehäuse (2) mittels einer vertikal beweglichen konzentrischen Doppelstanze (14) Schale und Kern der Frucht (20) gelöst und abgestoßen werden und wobei am Ende des Schutzgehäuses (2) der verzehrfertige Fruchtkörper (20d) über eine Fallöffnung (13) in einen darunter befindlichen Aufnahmebehälter (23) absinkt und zusammen mit dem Aufnahmebehälter (23) entnommen werden kann.

Eine demselben Zweck dienende **Vorrichtung** weist die entsprechenden Vorrichtungsmerkmale auf.

## Beschreibung

### Technisches Gebiet

Ananasfrüchte gehören mittlerweile zum Standardangebot von Selbstbedienungsläden oder -märkten, und zwar ganzjährig. Sie gelten als wohlschmeckend, erfrischend und gesund. Allerdings müssen sie von ungenießbaren Bestandteilen befreit werden, ehe sie verzehrt werden können. Ungenießbar sind insbesondere die harte äußere Schale, das mit einem Blüten- oder Blätterstrunk versehene Kopfteil, das ein Stielende aufweisende Fußteil und ein etwa zylindrisches hartes Mittelteil, der sog. Kern.

In einfachster Weise lassen sich die störenden oder ungenießbaren Bestandteile mit einem kräftigen Messer abtrennen, ggf. unter weiterer Zerkleinerung der genießbaren Restfrucht. Dazu bedarf es zumindest eines kräftigen und scharfen Messers und eines hohen Kraftaufwandes. Damit einher geht immer eine hohe Verletzungsgefahr, die umso größer ist, je weniger Erfahrung der jeweilige Anwender mit diesen Praktiken hat.

Es hat deshalb schon Vorschläge gegeben, die zu behandelnde Frucht in ganz bestimmte Positionen zu bringen, um die einzelnen Bearbeitungsschritte mit mehr Sicherheit ausführen zu können.

So erweist sich bereits das Entfernen der äußeren Schale als gefährlich und umständlich. Dafür schlägt die EP-0301796 A2 eine Einspann- und Drehvorrichtung vor, mit der die äußere Schale als fortlaufender Streifen abgeschält werden soll. Die FR-1.591.589 gibt eine Halte- und Stanzvorrichtung an, mit der der Kern einer (geschälten) Frucht entfernt werden kann. Und die EP-0084204 A1 offenbart, wie bei einer bereits von Kopf- und Fußteil befreiten Frucht äußere Schale und Kern durch Stanzen gleichzeitig entfernt werden können.

Inzwischen besteht das Bestreben oder der Wunsch, das gesamte Bearbeitungsverfahren so sicher auszugestalten, dass selbst Laien ohne Erfahrung es erfolgreich betreiben können, wie Kunden eines SB-Marktes, welche dort eine frische Ananas einfach nach ihren Vorstellungen auswählen und sie anschließend an Ort und Stelle mühe- und gefahrlos verzehrfertig aufbereiten und letztlich in einer Verpackung mit nach Hause nehmen sollen.

### Darstellung der Erfindung

Der Erfindung liegt daher die Aufgabe zugrunde, ein Verfahren und eine Vorrichtung zur verzehrfertigen Aufbereitung frischer Ananasfrüchte zu entwickeln, die mühe- und gefahrlos betrieben werden können.

Diese Aufgabe wird für das Verfahren mit den Merkmalen gemäß Anspruch 1 und für die Vorrichtung mit den Merkmalen gemäß Anspruch 4 gelöst.

Der Begriff "Schutzgehäuse" soll hier klarmachen, dass die sich zwischen Anfang und Ende abspielenden Vorgänge nicht weiter von außen beeinflusst werden können bzw. entlang dieser quasi gekapselten Strecke keine gefahrvollen Manipulationen vorgesehen sind bzw. solche geradezu ausgeschlossen bleiben. Bei dem Schutzgehäuse handelt es sich um ein einfaches oder übliches Gehäuse, eine Haube oder eine Abdeckung, welche ohne Demontage keine äußeren Eingriffe mehr zulässt. Im Ergebnis verbleiben damit nur eine offene Aufnahme für die noch unbehandelte Frucht am Anfang und eine freie Entnahmemöglichkeit für die fertig geschälte Frucht (zylindrische Restfrucht) mitsamt einem Aufnahmebehälter am Ende der Bearbeitungsstrecke.

Eine Verschiebung der Frucht auf Höhe des unteren Messers hat u. A. zur Folge, dass eine optimale Arbeitshöhe, wie sie bereits für das Einstellen der natürlichen Frucht anzustreben ist, im Wesentlichen bis zur späteren Entnahme der verzehrfertigen Restfrucht beibehalten wird. Ein ruckfreier, glatter Durchlauf der Frucht mit nur geringer Vorschubkraft ist gewährleistet, wenn die zu behandelnde Frucht auf einer glatten Verschiebebahn auf Höhe des unteren Messers bewegt wird bis zur Fallöffnung über dem Aufnahmebehälter. Frisch austretender Fruchtsaft kann dabei bis zu einem gewissen Grad als Gleitmittel wirken.

Für das Abschneiden von Kopf- und Fußteil sollen Messer mit V-förmiger Schneide, welche nach vorne auseinander geht und über innen liegende Schnittflächen verfügt, zum Einsatz kommen. Letztere zentrieren die Frucht, erleichtern anfangs ein Eindringen in die harte Schale und stabilisieren danach die angeschnittene Frucht, weshalb diese ohne Käfig, ohne zusätzliche Halterung o. Ä. von Station zu Station geführt und weiter bearbeitet werden kann.

Zur Durchführung des Verfahrens schlägt die Erfindung eine Vorrichtung vor, bei der die einzelnen Stationen ab einer Fruchtauflage (zur erstmaligen Positionierung der ganzen Frucht) bis zur Entnahme des verzehrfertigen Fruchtkörpers (mitsamt einer Verpackung) im Wesentlichen hintereinander auf etwa gleicher Arbeitshöhe angeordnet sind.

Das betrifft vor allem ein unteres Horizontalmesser mit anschließender Zuführstrecke zu einer Stanzauflage sowie darauf folgend eine weitere Zuführstrecke zu einer Fallöffnung. Dabei ist lediglich die anfängliche Fruchtauflage abgesenkt, und zwar um das Maß des abzuschneidenden unteren Endes (Fußteils) der rohen Frucht, ggf, mit überstehendem Stielende.

In parallelem Abstand zum unteren Horizontalmesser ist noch ein oberes Horizontalmesser vorgesehen zum gleichzeitigen Abschneiden des Kopfteils der Frucht, ggf, mitsamt einem Blüten- oder Blättarstrunk. Vorteilhaft ist dieses obere Horizontalmesser höhenverstellbar. Ein ihm zugeordneter Abstreifer hält das gelöste Kopfteil zurück oder lenkt es beim weiteren Vorschub der Frucht ab, so dass es bereits an dieser Station den Bearbeitungsprozess als Abfall verlässt. Alternativ kann auch ein beweglicher Abstreifer vorgesehen werden, welcher das abgetrennte Kopfteil periodisch oder taktweise vom oberen Horizontalmesser abräumt.

Die nächste Station beinhaltet außer der erwähnten Stanzauflage eine darüber befindliche Stanze mit einem auf und ab beweglichen Stanzwerkzeug (Doppelstanze) zum gleichzeitigen Lösen (Entfernen) des inneren Kerns wie auch Abtrennen und Zerteilen der äußeren Schale.

Die danach verzehrfertige Restfrucht verlässt die Arbeitsebene über eine Fallöffnung und gelangt in einen darunter abgestellten Aufnahme- oder Transportbehälter.

Für den Vorschub, welcher nicht nur für einen Positionswechsel von Station zu Station nötig ist, sondern im Falle der Horizontalmesser auch für die Schneidwirkung, sorgt ein seitlicher Antrieb, insbesondere ein Spindelantrieb, welcher eine eingestellte Frucht über einen Mitnehmer oder auskragenden Schieber erfasst. In Ermangelung einer Frucht zieht sich der Schieber in Ausgangsstellung zurück und schaltet der Antrieb letztlich ab.

Schließlich können die einzelnen Arbeitsstationen auf einem lösbaren Rahmenteil, einer Platte o. dgl. angeordnet sein, um sie insbesondere zu Reinigungszwecken einfach und schnell entnehmen zu können.

### Kurze Beschreibung der Zeichnung

Weitere Einzelheiten der Erfindung geben die Ansprüche an.

Die Erfindung wird nachfolgend anhand eines bevorzugten Ausführungsbeispiels in Verbindung mit der Zeichnung weiter erläutert. Darin zeigen:
- Fig. 1: eine Vorrichtung mit den wesentlichen Arbeitsstationen in schematischer Seitenansicht bei aufgeschnittenem Schutzgehäuse,
- Fig. 2: eine schematische Draufsicht auf die Arbeitsstationen ohne Schutzgehäuse,
- Fig. 3: eine der Fig. 1 entsprechende Darstellung mit eingestellter Ananasfrucht zu Beginn des Bearbeitungsprozesses,
- Fig. 4: die Ananasfrucht beim Durchlauf durch die Horizontalmesser,
- Fig. 5: die Ananasfrucht, positioniert auf der Stanzauflage, und
- Fig. 6: die fertig geschälte Ananasfrucht unmittelbar vor dem Absinken in einen Aufnahmebehälter.

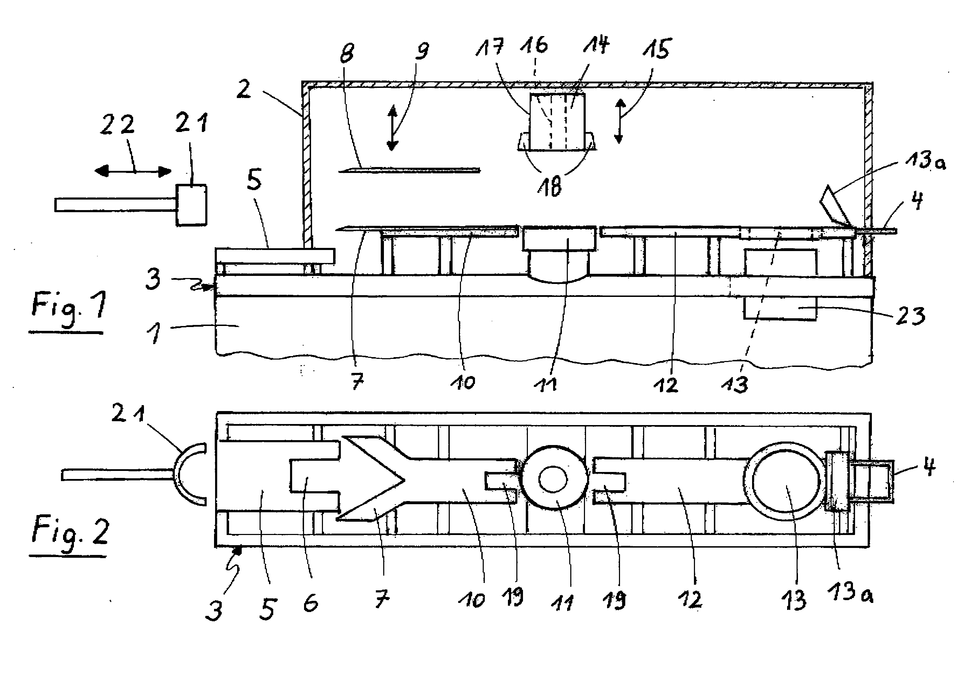

Die Fig. 1 und 2 geben eine spezielle Ausführungsform einer erfindungsgemäßen Vorrichtung an, nämlich eine kompakte Grundform, welche mit Hilfe eines Untergestells oder Unterbaus 1 (hier nur schematisch dargestellt) auf die gewünschte Arbeitshöhe gebracht werden kann. Eine erhöhte Position führt zu einem unteren Freiraum, in dem Auffangbehälter für Schalen und Fruchtreste sowie überschüssigen Saft angeordnet werden können. Die Bauform insgesamt kann so gewählt werden, dass sie als Modul mit gängigen Abmessungen zum Einsatz kommt, ähnlich einem Getränkeautomat oder dergleichen. Auf diese weitergehende Darstellung wird hier jedoch aus Gründen einer besseren Übersicht verzichtet. Danach lässt sich die Vorrichtung wie folgt beschreiben.

Oberhalb eines hier nur schematisch dargestellten Untergestells 1 ist eine Haube als Schutzgehäuse 2 für verschiedene Arbeitsstationen vorgesehen. Die Arbeitsstationen sind überwiegend auf einem lösbaren Rahmenteil 3 mit einem Griff 4 angeordnet. Vor dem Schutzgehäuse 2 ist eine bis ins Innere reichende horizontale Auflageebene für eine Frucht vorgesehen, welche hier als Fruchtauflage 5 bezeichnet wird. Sie weist in Draufsicht eine ausreichend bemessene Aussparung 6 für das Fußteil bzw. das Stielende am Fuß einer Frucht auf, was der Frucht zu einem festen Sitz verhilft.

In parallelem Abstand zur Fruchtauflage 5 sind ein unteres Horizontalmesser 7 sowie ein oberes Horizontalmesser 8 vorgesehen, welche beide eine V-förmige Schneide mit innen liegenden Schnittflächen aufweisen. Das obere Horizontalmesser 8 ist höhenverstellbar, was mit dem Doppelpfeil 9 versinnbildlicht ist.

Das untere Horizontalmesser 7 gibt für die nachfolgenden Arbeitsstationen die Höhe an, denn diese folgen hier in derselben Ebene, was für eine Zuführstrecke 10 zu einer Stanzauflage 11 und eine Zuführstrecke 12 zu einer Fallöffnung 13 gilt. Den Abschluss bildet dabei ein Kippanschlag 13a.

Mit der Stanzauflage 11 wirkt eine Doppelstanze 14 zusammen, welche in Richtung des Doppelpfeiles 15 auf und ab beweglich ist und einerseits mittels einer inneren Ringschneide 16 den ungenießbaren Kern einer Ananasfrucht ausstanzt und andererseits mittels einer äußeren Ringschneide 17 die äußere Schale abtrennt und diese mittels radial abstehender flossenartiger Schneiden 18 zusätzlich zerteilt. Für letztere sind Aussparungen 19 in den Zuführstrecken 10 und 12 vorgesehen.

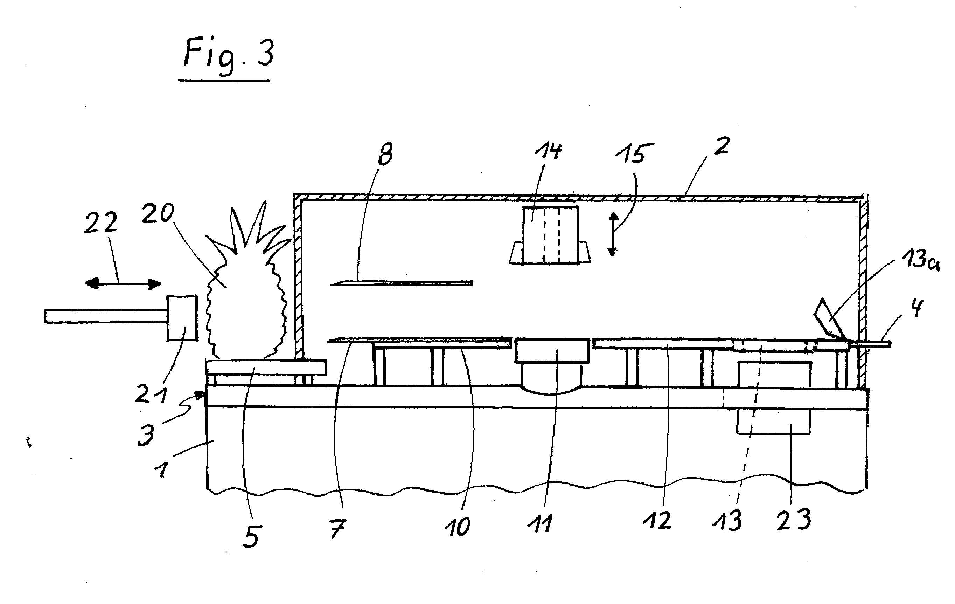

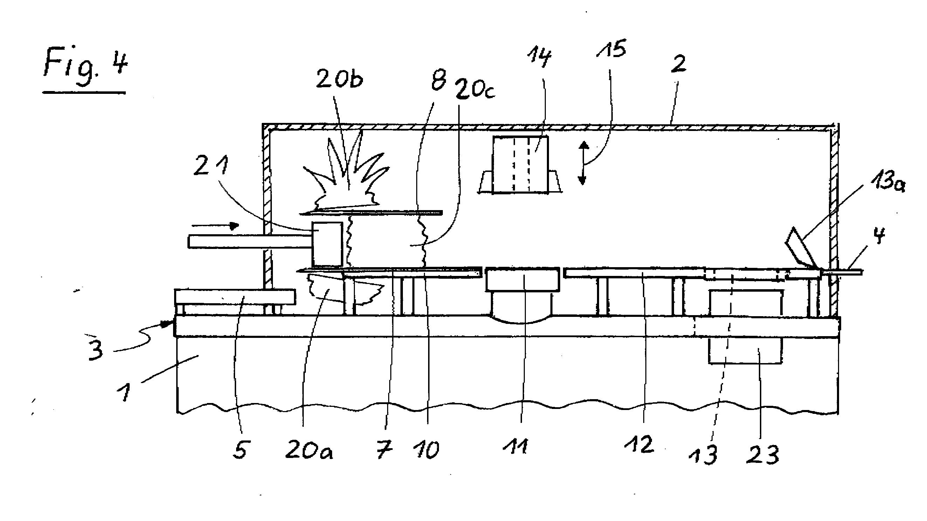

Die mit vorgenannter Vorrichtung möglichen Bearbeitungsschritte sind in den Fig. 3, 4, 5 und 6 dargestellt. Eine in die Fruchtauflage 5 eingestellte Frucht 20 (Fig. 3) wird von dort in die nachfolgenden Positionen mittels eines Schiebers 21 in Verbindung mit einem seitlichen Spindelantrieb (nicht dargestellt) geschoben, d. h. zwangsgeführt, wobei der Schieber 21 in Richtung des Doppelpfeiles 22 beweglich ist. Der erste Bearbeitungsschritt (Fig. 4) führt zur Abtrennung von Fußteil 20a und Kopfteil 20b der Frucht 20.

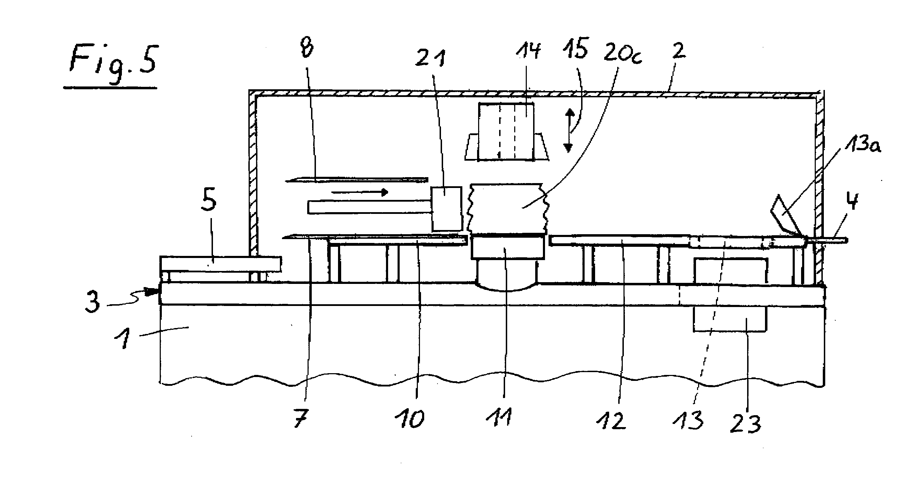

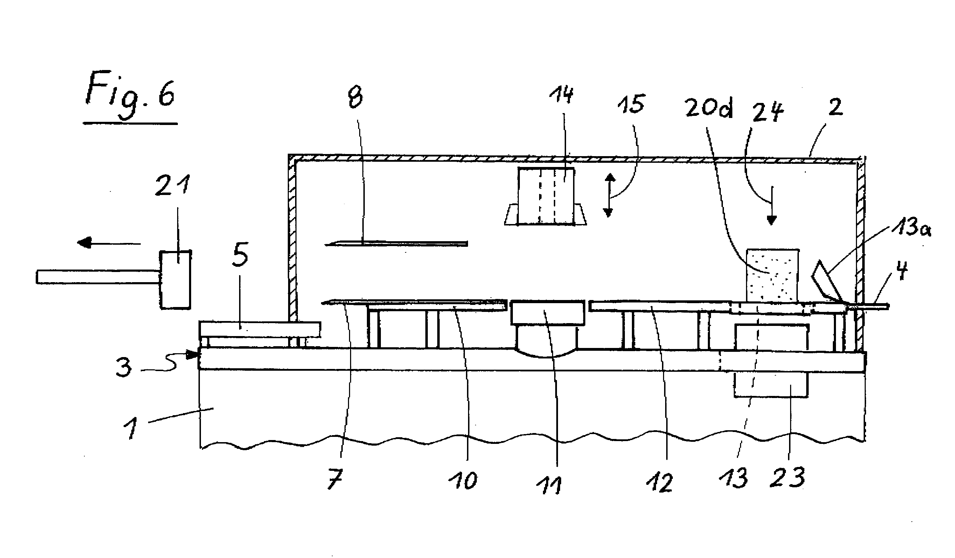

Der restliche Fruchtkörper 20 c wird gemäß Fig. 5 auf der Stanzauflage 11 von seiner äußeren Schale wie auch seinem inneren Kern befreit und gelangt danach als zylinderförmiger, verzehrfertiger Fruchtkörper 20d über die Fallöffnung 13 in einen darunter befindlichen Aufnahmebehälter 23, wie mit Pfeil 24 in Fig. 6 angedeutet.

Damit endet der eigentliche Bearbeitungsvorgang und kehrt der Schieber 21 in seine Grundstellung zurück. Soll die verzehrfertige Frucht 20a samt Aufnahmebehälter 23 aus irgendwelchen Gründen nicht unmittelbar an der Vorrichtung entnommen werden, so kann im Anschluss an die Vorrichtung noch ein Transportband vorgesehen werden, welches Frucht 20a und Aufnahmebehälter 23 an eine beliebige andere Entnahmestelle befördert.

### Bezugszeichenliste

- 1: Untergestell, Unterbau
- 2: Haube, Schutzgehäuse
- 3: Rahmenteil
- 4: Griff
- 5: Fruchtauflage, Fruchtaufnahme
- 6: Aussparung
- 7: unteres Horizontalmesser, Messer
- 8: oberes Horizontalmesser, Messer
- 9: Doppelpfeil
- 10: Zuführstrecke
- 11: Stanzauflage
- 12: Zuführstrecke
- 13: Öffnung, Fallöffnung
- 13a: Kippanschlag
- 14: Doppelstanze
- 15: Doppelpfeil
- 16: innere Ringschneide
- 17: äußere Ringschneide
- 18: flossenartige Schneide
- 19: Aussparung
- 20: Frucht, Ananasfrucht
- 20a: Fußteil
- 20b: Kopfteil
- 20c: Fruchtkörper
- 20d: verzehrfertiger Fruchtkörper
- 21: Mitnehmer, Schieber
- 22: Doppelpfeil
- 23: Aufnahmebehälter
- 24: Pfeil

## Patentansprüche

1. Verfahren zum gefahrlosen Aufbereiten frischer Ananasfrüchte für den Verzehr mit den folgenden Merkmalen:
- Die zu bearbeitende natürliche Frucht (20) wird in eine nach oben offene Fruchtaufnahme oder Fruchtauflage (5) eingestellt und
- anschließend mit Hilfe eines Mitnehmers oder Schiebers (21) horizontal durch ein Schutzgehäuse (2) zwangsgeführt,
- wobei an dessen Anfang mittels eines horizontal angeordneten unteren Messers (7) und eines davon beabstandeten oberen Messers (8) Kopfteil (20b) und Fußteil (20b) der Frucht (20) abgetrennt werden,
- wonach im mittleren Bereich des Schutzgehäuse (2) mittels einer vertikal beweglichen konzentrischen Doppelstanze (14) Schale und Kern der Frucht (20) gelöst und abgestoßen werden und
- wobei am Ende des Schutzgehäuses (2) der verzehrfertige Fruchtkörper (20d) über eine Fallöffnung (13) in einen darunter befindlichen Aufnahmebehälter (23) absinkt und zusammen mit dem Aufnahmebehälter (23) entnommen werden kann.

2. Verfahren nach Anspruch 1, **dadurch gekennzeichnet, dass** die zu behandelnde Frucht (20) auf einer glatten Verschiebebahn auf Höhe des unteren Messers (7) bis in den Bereich der Fallöffnung (13) über dem Aufnahmebehälter (23) bewegt wird.

3. Verfahren nach Anspruch 1 oder 2, **dadurch gekennzeichnet, dass** für das Abschneiden von Kopfteil (20b) und Fußteil (20a) Horizontalmesser (7, 8) mit V-förmiger Schneide eingesetzt werden.

4. Vorrichtung zum gefahrlosen Aufbereiten frischer Ananasfrüchte für den Verzehr, welche folgende Merkmale aufweist:
- eine erste Fruchtauflage (5),
- ein Schutzgehäuse (2) als seitlicher und oberer Abschluss,
- eine im Innern des Schutzgehäuses (2) befindliche horizontale Arbeitsebene, auf der Arbeitsstationen aufeinander folgend angeordnet sind, nämlich
- ein unteres Horizontalmesser (7),
- eine Zuführstrecke(10) für
- eine Stanzauflage (11),
- eine Zuführstrecke (12) für
- eine Fallöffnung (13) und
- einen Vorschub-Antrieb, um die zu bearbeitende Frucht (20) nach dem Einstellen auf die erste Fruchtauflage (5) sukzessive den Arbeitsstationen zuzuführen, ferner
- ein im Abstand über dem unteren Horizontalmesser (7) angeordnetes oberes Horizontalmesser (8) und
- eine mit der Stanzauflage (5) zusammenwirkende auf und ab bewegliche Doppelstanze (14).

5. Vorrichtung nach Anspruch 4, **dadurch gekennzeichnet, dass** die Arbeitsstationen linear ausgerichtet sind.

6. Vorrichtung nach Anspruch 4 oder 5, **dadurch gekennzeichnet, dass** die Fruchtauflage (5) eine Aussparung (6) für das Fußteil (20a) einer Frucht (20) aufweist.

7. Vorrichtung nach einem der Ansprüche 4 bis 6, **dadurch gekennzeichnet, dass** das obere Horizontalmesser (8) höhenverstellbar ist.

8. Vorrichtung nach einem der Ansprüche 4 bis 7, **dadurch gekennzeichnet, dass** die Doppelstanze (14) mindestens zwei radial nach außen weisende flossenartige Schneiden (18) zum Durchtrennen der gelösten äußeren Schale eines Fruchtkörpers (20c) aufweist.

9. Vorrichtung nach einem der Ansprüche 4 bis 8, **dadurch gekennzeichnet, dass** - in Vorschubrichtung gesehen - hinter der Fallöffnung (13) ein Kippanschlag (13a) für den verzehrfertigen Fruchtkörper (20d) vorgesehen ist.

10. Vorrichtung nach einem der Ansprüche 4 bis 9, **dadurch gekennzeichnet, dass** die in einer Ebene liegenden Arbeitsstationen auf einem herausnehmbaren Rahmenteil (3) angeordnet sind.

11. Vorrichtung nach einem der Ansprüche 4 bis 10, **dadurch gekennzeichnet, dass** der Vorschub-Antrieb einen die Frucht (20, 20c, 20d) teilweise umgreifenden Schieber (21) aufweist.
